Europäisches Patentamt

European Patent Office

Office européen des brevets

(11) Veröffentlichungsnummer: **0 556 722 A1**

## (12) EUROPÄISCHE PATENTANMELDUNG

(21) Anmeldenummer: **93102151.3**

(22) Anmeldetag: **11.02.93**

(51) Int. Cl.5: **C09K 3/30**

(30) Priorität: **19.02.92 DE 4205005**

(43) Veröffentlichungstag der Anmeldung:
**25.08.93 Patentblatt 93/34**

(84) Benannte Vertragsstaaten:
**AT BE CH DE DK ES FR GB IT LI NL SE**

(71) Anmelder: **HOECHST AKTIENGESELLSCHAFT**

**D-65926 Frankfurt(DE)**

(72) Erfinder: **Deger, Hans-Matthias, Dr.**
**Herrnpfad 10**
**W-6238 Hofheim/Ts(DE)**
Erfinder: **Schütz, Claudia**
**Dresdner Strasse 9**
**W-6093 Flörsheim am Main(DE)**

(54) **Verfahren zur Senkung des Gesamtdruckes in Aerosol-Packungen.**

(57) Die Erfindung betrifft ein Verfahren zur Senkung des Gesamtdruckes in Aerosol-Packungen, die mindestens ein teilweise fluoriertes Alkan mit 2 oder 3 C-Atomen und einem Dampfdruck von über 3 bar bei 50°C als Treibgas enthalten. Dabei wird das genannte Treibgas mit mindestens einem teilweise fluorierten Alkan, das einen Dampfdruck von unter 3 bar bei 50°C hat, und/oder mindestens einem teilweise fluorierten Ether gemischt.

EP 0 556 722 A1

Als Treibgase in Aerosolen werden komprimierte Gase, wie $CO_2$ oder $N_2O$, oder verflüssigte Gase wie Fluorchlorkohlenwasserstoffe, Dimethylether oder Mischungen aus Propan und Butan eingesetzt. Auch Kombinationen von komprimierten und verflüssigten Gasen werden verwendet.

Jedes Treibmittel bietet individuell verschiedene Vorteile und Nachteile, die hauptsächlich auf seine physikalischen Eigenschaften zurückzuführen sind. So hat jedes komprimierte Gas den Nachteil, daß sein Druck umgekehrt proportional dem Volumen ist, das seiner Masse zur Verfügung steht. Für die Aerosolpackung bedeutet dies, daß der Druck im Behälter bei dessen Entleerung sinkt, so daß sich das Sprühverhalten laufend ändert. Dieser Effekt kann zwar bei guter Löslichkeit des komprimierten Gases in der flüssigen Wirkstofflösung mehr oder weniger stark abgeschwächt, jedoch nicht quantitativ kompensiert werden.

Einige verflüssigte Gase haben den aus sicherheitstechnischer Sicht gravierenden Nachteil, daß sie mit Luft explosive Gemische bilden können. Andere sind trotz sonst günstiger physikalischer Eigenschaften aus toxikologischen und ökologischen Gründen als Aerosoltreibmittel abzulehnen.

Bei den unbrennbaren und toxikologisch unbedenklichen Fluorchlorkohlenwasserstoffen (FCKW) haben insbesondere die Verbindungen R 11, R 12 und R 114 als Treibgase in Spraypackungen große Bedeutung erlangt. Mit Mischungen dieser Verbindungen können je nach Mischungsverhältnis Aerosolprodukte hergestellt werden, die bei 50°C jeden beliebigen Dampfdruck zwischen 12 bar und dem Sättigungsdampfdruck der am höchsten siedenden Verbindung, nämlich R 11, haben. Des weiteren können über die Mischungsverhältnisse neben den erwünschten Drücken auch bestimmte Dichten, Viskositäten und Stabilitäten der Aerosolformulierungen eingestellt bzw. abgestimmt werden.

Nach den in Deutschland geltenden "Technischen Regeln Druckgase 300 (TRG 300, Einwegbehälter) zur Deutschen Druckbehälterverordnung" dürfen Druckgasdosen (Aerosoldosen) bei 50°C nur einen Überdruck von max. 12 bar aufweisen. Diese Forderung wird von den FCKW in idealer Weise erfüllt. Aus wirtschaftlichen Gründen werden überdies für die meisten Aerosolprodukte (z.B. Haar- und Lacksprays) Aerosoldosen aus Weißblech eingesetzt, deren maximal zulässiger Betriebsüberdruck bei 50°C normalerweise lediglich 8 bar beträgt.

Zur Vermeidung der Deklaration der Aerosolpackungen mit dem Warnhinweis "brennbar" müssen in vielen Ländern Aerosole mindestens 55 Gew.-% an nichtbrennbaren Komponenten enthalten. Insbesondere auf dem Sektor der kosmetischen und pharmazeutischen Aerosole ist dies nur mittels entsprechender Mengen von FCKW und/oder wasserstoffhaltigen Fluorchlorkohlenwasserstoffen (HFCKW) und/oder wasserstoffhaltigen Fluorkohlenwasserstoffen (HFKW) als Treibmitteln erfüllbar, da die Verwendung unbrennbarer Lösemittel in diesen Mengen meist aus Toxizitätsgründen ausscheidet.

Aufgrund ihrer hohen Beständigkeit gegen biotischen und abiotischen Abbau gelangen die in die Atmosphäre abgegebenen FCKW-Moleküle ungehindert in die Stratosphäre, wo durch harte UV-Einstrahlung Chlor-Radikale abgespalten werden können, die dann in einem katalytischen Prozeß Ozon-Moleküle spalten und wahrscheinlich eine Ausdünnung der Ozonschicht bewirken. Erschwerend kommt hinzu, daß diese Fluorchlorkohlenwasserstoffe nicht unerheblich zum Treibhauseffekt beitragen. Aus diesem Grund sollten FCKW so bald als möglich durch ökologisch verträglichere Verbindungen ersetzt werden.

Als Alternativen zu FCKW und HFCKW als Treibgasen bei technischen und pharmazeutischen Aerosolen werden zur Zeit chlorfreie, teilfluorierte, bei Normalbedingungen gasförmige Alkane mit 2 oder 3 C-Atomen, wie R 32, R 125, R 134, R 134a, R 143, R 143a, R 152a, R 218, R 227, R 236, R 245 sowie R 254 diskutiert. Diese Verbindungen haben jedoch relativ niedrige Siedepunkte und müssen daher mit höhersiedenden Verbindungen vermischt werden, damit der Gesamtdruck im Aerosol-Behälter nicht zu hoch wird. Brennbare Verbindungen wie Kohlenwasserstoffe oder Alkohole, z.B. Methanol, Ethanol, Propanol können aus Sicherheitsgründen, wie oben erwähnt, lediglich in relativ geringen Mengen zugesetzt werden. Daher kann oftmals mit ihnen der resultierende Gesamtdruck in der Aerosol-Packung nicht unter die erlaubten Maximaldrücke bei 50°C von 12 bar (Aluminium-Druckdosen) bzw. 8 bar Weißblechdosen) gesenkt werden.

Es wurde nun gefunden, daß der Gesamtdruck durch Zusatz von höhersiedenden teilfluorierten Alkanen und Ethern erheblich gesenkt wird.

Gegenstand der Erfindung ist ein Verfahren zur Senkung des Gesamtdruckes in Aerosol-Packungen, die mindestens ein teilweise fluoriertes Alkan mit 2 oder 3 C-Atomen und einem Dampfdruck von über 3 bar bei 50°C als Treibgas enthalten, dadurch gekennzeichnet, daß man das genannte Treibgas mit mindestens einem teilweise fluorierten Alkan der Formel

$C_aH_bF_c$    (I)

mit a = 3 - 6, b = 1 - 12 und c = 2 - 13
und einem Dampfdruck von unter 3 bar bei 50°C
und/oder mindestens einem teilweise fluorierten Ether der Formel

2

$C_dH_eF_f\text{-}O\text{-}C_gH_hF_i$ (II)

mit d = 1 - 16, e = 1 - 12, f = 1 - 12, g = 1 - 3, h = 0 - 5 und
i = 0 - 5

mischt.

Als teilweise fluorierte Alkane mit 2 oder 3 C-Atomen kommen vor allem die oben genannten Verbindungen R 32, R 125, R 134, R 134a, R 143, R 143a, R 152a, R 218, R 227, R 236, R 245 und R 254 in Frage. Allgemein sind alle teilweise fluorierten Alkane mit 2 oder 3 C-Atomen gemeint, die nur H, F und C enthalten und bei 50°C einen Dampfdruck über 3 bar haben.

Unter den teilweise fluorierten Alkanen der Formel (I) sind diejenigen mit a = 3 - 5, b = 1 - 9 und c = 3 - 11 bevorzugt, insbesondere diejenigen mit a = 3 - 4, b = 1 - 6 und c = 4 - 9, jeweils unter der Voraussetzung, daß ihr Dampfdruck bei 50°C unter 3 bar liegt.

Unter den teilweise fluorierten Ethern der Formel (II) sind diejenigen mit d = 1 - 5, e = 1 - 6, f = 5 - 10, g = 1 - 2, h = 0 - 3 und i = 2 - 5 bevorzugt, insbesondere diejenigen mit d = 1 - 3, e = 1 - 4, f = 1 - 6, g = 1 - 2, h = 0 - 3 und i = 2 - 5.

Die Herstellung der Fluoralkane (I) und der fluorierten Ether (II) wird beschrieben in Ullmann's Encyclopedia of Industrial Chemistry, Volume A 11 (1988), Seite 349 - 389, insbesondere Seite 367; A.M. Lovelace et al., Aliphatic Fluorine Compounds (1958); H. Liebig und K. Ulm, Herstellung und Anwendung aliphatischer Fluorverbindungen II., Chemiker-Zeitung (1976), S. 3 - 13.

Die Drucksenkung ist umso größer, je höher der Anteil der höhersiedenden Komponente (I) und/oder (II) im Gesamtgemisch ist. Wenn die Komponenten (I) oder (II) nur zur Drucksenkung und nicht gleichzeitig auch als Lösemittel bzw. Lösevermittler dienen, wird man vorzugsweise ihren Anteil an der Gesamtabfüllung nur so hoch wählen, wie zur Unterschreitung des maximal erlaubten Druckes (12 bar bzw. 8 bar) bei 50°C erforderlich und für die produktabhängige Sprühqualität günstig ist. Das heißt, vorzugsweise wählt man den Anteil der niedrig siedenden teilfluorierten Alkane mit 2 bis 3 C-Atomen möglichst hoch, solange dabei der maximal erlaubte Druck nicht überschritten wird. Je nach Mischungsverhältnis der niedrig siedenden $C_2$-$C_3$-Fluoralkane mit den Komponenten (I) und/oder (II), kann auch bei Einsatz einer zusätzlichen brennbaren Komponente die Gesamtmischung unbrennbar eingestellt werden.

Die Fluoralkane (I) und die fluorierten Ether (II) können geradkettig oder verzweigt sein. Man kann ein oder mehrere Fluoralkane der Formel (I) als Drucksenker einsetzen, ebenso einen oder mehrere fluorierte Ether der Formel (II), oder auch Mischungen aus einem oder mehreren Fluoralkanen der Formel (I) und einem oder mehreren fluorierten Ethern der Formel (II). Die mit den Fluoralkanen der Formel (I) erzielbaren Drucksenkungen werden in den folgenden Beispielen mittels der Verbindungen 1H-Perfluorhexan (1H-PFH), Dihydroperfluorisohexan (DHPFH) und 1,4-Dihydrooctafluorbutan (DHFB) illustriert. Analog wird die mit den fluorierten Ethern der Formel (II) erzielbare Drucksenkung mittels der Verbindung 2,2,2-Trifluorethyl-1,1,2,2-tetrafluorethylether (TFE-TFEE) illustriert.

Beispiel 1

Es wurden Druckprüfungen an reinem R 134a und R 227 ($C_2$-$C_3$-Treibgase), sowie an deren 50:50-Gemischen mit 1H-PFH, DHPFH, DHFB bzw. TFE-TFEE bei 50°C durchgeführt. Dabei wurden 175 ml-Aluminiumdruckdosen zunächst mit einer der genannten Komponenten (I) oder (II) gefüllt, dann wurde die Luft aus dem Gasraum durch Eingasen einer hinreichenden Menge von R 134a bzw. R 227 verdrängt, dann die Dosen mit einem Aerosolventil ohne Steigrohr verschlossen und schließlich R 134a bzw. R 227 unter Druck durch das Ventil eingebracht.

Die Druckmessung erfolgte nach einstündiger Lagerung der Abfüllungen im Thermostaten bei 50°C mittels eines Rohrfeder-Feinmeßmanometers Klasse 0.6, Meßbereich 0 - 16 bar Überdruck und Skalen-Einteilung von 0.1 bar. Die Ergebnisse sind in Tabelle 1 dargestellt.

Beispiel 2

Es wurde gearbeitet wie in Beispiel 1, mit der einzigen Ausnahme, daß das Verhältnis von R 134a bzw. R 227 zu den Komponenten (I) oder (II) statt 50:50 jetzt 75:25 betrug. Die Ergebnisse sind in Tabelle 2 dargestellt.

EP 0 556 722 A1

Tabelle 1

| C$_2$-C$_3$-Treibgas | Komponente (I) oder (II) | Überdruck (bar) |
|---|---|---|
| R 134a | - | 12,2 |
| " | 50 % DHPFH | 8,0 |
| " | 50 % 1H-PFH | 7,6 |
| " | 50 % DHFB | 6,9 |
| " | 50 % TFE-TFEE | 7,0 |
| R 227 | - | 8,2 |
| " | 50 % DHPFH | 4,9 |
| " | 50% 1H-PFH | 4,8 |
| " | 50% DHFB | 4,3 |
| " | 50 % TFE-TFEE | 4,0 |

Tabelle 2

| C$_2$-C$_3$-Treibgas | Komponente (I) oder (II) | Überdruck (bar) |
|---|---|---|
| R 134a | - | 12,2 |
| " | 25 % DHPFH | 9,2 |
| " | 25% 1H-PFH | 9,9 |
| " | 25 % DHFB | 9,3 |
| " | 25 % TFE-TFEE | 9.5 |
| R 227 | - | 8,2 |
| " | 25 % DHPFH | 6,0 |
| " | 25 % 1H-PFH | 6,0 |
| " | 25 % DHFB | 5,3 |
| " | 25 % TFE-TFEE | 4,7 |

**Patentansprüche**

1. Verfahren zur Senkung des Gesamtdruckes in Aerosol-Packungen, die mindestens ein teilweise fluoriertes Alkan mit 2 oder 3 C-Atomen und einem Dampfdruck von über 3 bar bei 50°C als Treibgas enthalten, dadurch gekennzeichnet, daß man das genannte Treibgas mit mindestens einem teilweise fluorierten Alkan der Formel

   $$C_aH_bF_c \quad (I)$$

   mit a = 3 - 6, b = 1 - 12 und c = 2 - 13
   und einem Dampfdruck von unter 3 bar bei 50°C
   und/oder mindestens einem teilweise fluorierten Ether der Formel

   $$C_dH_eF_f\text{-O-}C_gH_hF_i \quad (II)$$

   mit d = 1 - 16, e = 1 - 12, f = 1 - 12, g = 1 - 3, h = 0 - 5 und
   i = 0 - 5
   mischt.

2. Verfahren nach Anspruch 1, dadurch gekennzeichnet, daß man als teilweise fluoriertes Alkan der Formel (I) eines mit a = 3 - 5, b = 1 - 9 und c = 3 - 11 und einem Dampfdruck von weniger als 3 bar bei 50°C einsetzt.

4

3. Verfahren nach Anspruch 1, dadurch gekennzeichnet, daß man als teilweise fluoriertes Alkan der Formel (I) eines mit a = 3 - 4, b = 1 - 6 und c = 4 - 9 und einem Dampfdruck von weniger als 3 bar bei 50°C einsetzt.

4. Verfahren nach Anspruch 1, dadurch gekennzeichnet, daß man als teilweise fluorierten Ether der Formel (II) einen mit d = 1 - 5, e = 1 - 6, f = 5 - 10, g = 1 - 2, h = 0 - 3 und i = 2 - 5 einsetzt.

5. Verfahren nach Anspruch 1, dadurch gekennzeichnet, daß man als teilweise fluorierten Ether der Formel (II) einen mit d = 1 - 3, e = 1 - 4, f = 1 - 6, g = 1 - 2, h = 0 - 3 und i = 2 - 5 einsetzt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 041 148 (C.W. SIMONS, G.J.O'NEILL, J.A. GRIBENS) <br> * Spalte 2, Zeile 65 - Spalte 3, Zeile 11 * <br> * Beispiele 5,6 * <br> --- | 1,4,5 | C09K3/30 |
| Y | EP-A-0 381 986 (BAYER AG) <br> * Seite 4, Zeile 6 - Zeile 7; Beispiele * <br> * Ansprüche 1-6,10 * <br> --- | 1-3 | |
| Y | EP-A-0 384 371 (HOECHST AKTIENGESELLSCHAFT) <br> * Beispiel 1 * <br> --- | 1-3 | |
| A | US-A-5 064 560 (A. N. MERCHANT) <br> * Ansprüche 1,11; Beispiele 1,2 * <br> --- | 1-3 | |
| A | EP-A-0 427 604 (ATOCHEM) <br> * Ansprüche 1,3 * <br> --- | 1-3 | |
| A | US-A-3 922 228 (W.M. HUTCHINSON) <br> * das ganze Dokument * <br><br> ----- | 1,4,5 | **RECHERCHIERTE SACHGEBIETE (Int. Cl.5)** <br><br> C09K |

Der vorliegende Recherchenbericht wurde für alle Patentansprüche erstellt

| Recherchenort | Abschlußdatum der Recherche | Prüfer |
|---|---|---|
| DEN HAAG | 18 MAI 1993 | PUETZ C. |

EPO FORM 1503 03.82 (P0403)